# EUROPEAN PATENT SPECIFICATION

(11) **EP 1 923 764 B1**
(45) Date of publication and mention of the grant of the patent: **22.08.2012**
(21) Application number: 05785106.5
(22) Date of filing: 10.09.2005
(51) Int. Cl.: G05D 23/24, A47J 27/21

(54) **A METHOD OF JUDGING WATER BOILING IN ELECTRIC KETTLES**
VERFAHREN ZUR BEURTEILUNG DES WASSERKOCHENS IN ELEKTRISCHEN KANNEN
PROCEDE DE DETERMINATION DE L'EBULLITION DE L'EAU DANS DES BOUILLOIRES ELECTRIQUES

(43) Date of publication of application: 21.05.2008
(73) Proprietor: Crastal Technology (Shenzhen) Co., Ltd., Shenzhen, Guangdong 518055 (CN)
(72) Inventor: ZHANG, George, Guangdong 518055 (CN); WANG, Yaolun, Guangdong 518055 (CN)
(74) Representative: Pfenning, Meinig & Partner GbR
(86) International application number: PCT/CN2005/001455
(87) International publication number: WO 2007/028282

(56) References cited:
- EP-A- 0 380 369
- EP-A1- 0 380 369
- WO-A2-01/56436
- CN-A- 1 364 061
- CN-A- 1 511 277
- CN-A- 1 740 929
- CN-Y- 2 299 562
- GB-A- 2 404 293
- JP-A- 2005 209 373
- US-A- 4 868 370
- US-A- 5 639 023
- US-A- 5 639 023

## Description

### Technical Field

The present invention relates to a method for controlling an electrical kettle, particularly to a method for determining whether water inside an electric kettle is boiling.

### Technical Background

Electric kettles are convenient for human in living and working. In conventional electric kettles used for heating water, boiling of the water is detected and controlled by using a steam switch made of bimetal strips. The steam pressure produced as the water boils is used to drive the switch to turn off the heating power supply. However, in this method it is disadvantageous that, a steam passage and motion mechanisms are required to allow a sufficient amount of steam to reach the steam switch, which restricts the design of the overall appearance of the electric kettle. Furthermore, this is not a sufficiently accurate method for turning off the heating power supply when the water is boiled. In another known method for determining whether water in an electric kettle is boiling, a sensor is used to measure the water temperature inside the electric kettle. When the water temperature inside the electric kettle reaches a preset temperature, a control circuit turns off the heating power supply of the electric kettle. A disadvantage of this method is that, at a place with a higher altitude, the preset temperature cannot be reached, and this causes the heating to continue despite the fact that water is already boiling. This may result in a potential safety hazard and accident.

Furthermore, inaccuracy of the sensor can also result in the power supply turned off even when water is not boiling, or vice versa.

Patent documents EP 0 380 369 A1 and JP 2005 209373A in the prior art may be useful for understanding the present invention.

EP 0 380 369 A1 discloses a control for a liquid heating vessel incorporating an electrically powered heating element and wherein the functions of the control are effected in dependence upon the provision of a single temperature sensor associated with the element so as when the vessel is filled with liquid to be subject predominantly to the liquid temperature and when the vessel is empty to be subject to the element temperature, the functions of the control including an automatic switch-off on boiling function ("BOIL") and an automatic switch-off when the heating element is powered without sufficient liquid in the vessel function ("DRY BOIL") both of which are effected in dependence upon the rate of temperature rise of the sensor.

However, this document does not show a comparison of the temperature change rate with that of a period prior a current period.

JP 2005 209373 A relates to a heating cooker and cookware. A plurality of infrared LEDs are mounted on the cookware, and a plurality of the infrared LEDs forms an infrared transmission region of 360° connecting in an annular form in a set state of the cookware. With such constitution, an infrared receiving circuit falls within the infrared transmission region at whatever angle the cookware is set, and it becomes unnecessary to care about a set angle of the cookware.

This apparatus uses temperatures of a prior interval and a current interval (which are stored in RAM) to obtain the current rate of temperature change. A new rate is then compared with the old stored rate of temperature change (from the period before) and the boiling point detected when the rate of change reduces to a defined minimum.

The present invention has improvements and advantages over these references, which will be better understood from the following description understanding the present invention.

### Summary of the Invention

The purpose of this invention is to provide a method for determining whether water inside an electric kettle is boiling, and the technical problem to be solved by the invention is to accurately detect whether water is boiling inside the electric kettle, and turn off the heating power supply when the water is boiling.

According to the present invention, there is provided a method for determining whether water inside an electric kettle is boiling comprising the following steps: (1) setting a temperature sensor, a microprocessor and a control circuit in the electric kettle; (2) detecting a temperature of the water inside the electric kettle, a temperature of a bottom heating unit which is in contact with the water, or a temperature of the sidewall of the electric kettle in real time by the sensor; (3) calculating a temperature change rate and comparing the temperature change rate with that of a period prior to the current period by the microprocessor; and (4) sending a signal to the control circuit when the temperature change rate decreases and reaches a minimum value, wherein the period for calculating the water temperature change rate is preset in the microprocessor and the microprocessor sets the period in different levels after resistors connected at an input port of the microprocessor receive a signal of the electric kettle's heating power.

Advantageous embodiments of the invention are focused in the dependent claims.

These are, for example, as follows:

According to the present invention, the control circuit turns off the power supply upon receipt of the signal sent by the microprocessor.

According to the present invention, the microprocessor compares the current water temperature, the temperature of the bottom heating unit which is in contact with the water, or the temperature of the sidewall of the kettle with that of a period prior to the current period.

According to the present invention, the microprocessor stores the water temperature and the water temperature change rate.

According to the present invention, the water temperature change rate refers to a minimal water temperature change rate during the current heating process.

According to the present invention, the microprocessor has a preset minimal water temperature change rate, and when the water temperature change rate is lower than the minimal water temperature change rate, the microprocessor sends a signal to the control circuit.

According to the present invention, the microprocessor clears the stored rates of change and comparison results after the heating power supply is cut off by the control circuit.

According to the present invention, the sensor detects the real time temperature of the water inside the electric kettle, the temperature of the bottom heating unit which is in contact with the water, or the temperature of the sidewall of the electric kettle when the control circuit turns on a heating power supply, and the water temperature change rate begins to be calculated when the temperature is higher than a threshold temperature for calculating the temperature change rate.

Compare with the prior art, the present invention adopts a microprocessor to calculate the temperature change rate, determine whether the water inside the electric kettle is boiling according to the variation of the temperature change rate during the heating process, and send a signal to the control circuit to turn off the heating power supply when the water is boiling. The present invention provides an accurate method of determining the water boiling inside the electric kettle and provides a timely control of power-breaking to avoid any potential safety hazard and accident.

### Detailed Embodiments

The present invention will be described in detail with reference to the following embodiments. Researches have shown that the water temperature change rate is different in the process of heating. At the initial stage of heating, the water temperature change rate decreases and reaches a minimum value. As the process of heating continues, the water temperature change rate increases, and then decreases to a minimum value again when the water is heated near to or to its boiling point. Based on this principle, the present invention provides a method for determining whether water inside an electric kettle is boiling with the following steps. The first step of the method comprises setting a temperature sensor, a microprocessor and a control circuit in the electric kettle. In a second step, the control circuit turns on a heating power supply which in turn triggers the sensor to detect a real time temperature of the water inside the electric kettle, a temperature of a bottom heating unit which is in contact with the water, or a temperature of the sidewall of the electric kettle. Thirdly, when the water temperature rises to a preset temperature, the microprocessor begins to calculate the rate of change of the water temperature, compare the rate and the water temperature with those of a period prior to the current period, respectively, and store the comparison results. Fourthly, when the temperature change rate decreases and reaches a minimum value, i.e., the rate reaches a minimum value during the current heating process, a signal is sent to the control circuit. Fifthly, the control circuit turns off the heating power supply. Sixthly, after the heating power supply is turned off, the program returns to its initial state, and the rates of change and intermediately calculated values are cleared.

The period for calculating the water temperature change rate is preset in the microprocessor. In this embodiment, the temperature sensor used in the electric kettle is a negative temperature coefficient (NTC) thermal resistor, the resistance of which is inversely proportional to the temperature. A DC voltage across the NTC thermal resistor reflects the water temperature. A digital quantity obtained from the DC voltage through an A/D conversion performing by the microprocessor is inversely proportional to the water temperature. After the heating power of the electric kettle is determined, a voltage dividing resistor with a resistance matching the heating power is connected to an input port of the microprocessor, and the period for calculating the water temperature change rate is set in different levels.

The method for calculating the temperature change rate is that: the digital quantity representing the current water temperature is a subtrahend, the digital quantity representing the water temperature one period before is a minuend, and the difference is the temperature change rate of one period.

The rate of the water temperature rise during the heating process of the electric kettle relates to the power, the kettle volume and the water level. The power and volume of a kettle are constants whereas the water level is variable. While calculating the temperature change rate for a specified electric kettle, the period of rate of change is a constant. Various voltage dividing resistors are set at an A/D conversion interface of the microprocessor in order to obtain inquiry codes for the program. The period for calculating the temperature change rate can be preset in the program after obtained by experiments. The resistors with various resistances are connected respectively to the A/D conversion interface of the microprocessor. The microprocessor is also preset with a minimum water temperature change rate for the sake of safety. When the water temperature change rate is less than the preset rate, the microprocessor sends a signal to the control circuit to turn off the heating power supply.

Example 1 - For an electric kettle with slower temperature rise and a relatively lower power of 1,200W, the electric kettle is provided with a negative temperature coefficient (NTC) thermal resistor, a microprocessor with multiple channel AD converters and a control circuit of transistors connected to the output port of the microprocessor. After power is on, the sensor detects the water temperature inside the kettle in real time. If the temperature is higher than a threshold temperature 55°C for calculating the temperature change rate, the water temperature change rate begins to be calculated, and the temperature and the calculated water temperature change rate are stored. The microprocessor calculates the water temperature change rate, as the calculation period is set as 10 seconds. The digital quantity representing the water temperature in previous 10 seconds is regarded as a minuend, and that representing the current water temperature is regarded as a subtrahend. The difference is the water temperature change rate. The water temperature change tends to be slow as the water temperature change rate is equal to or lower than 1. When the water temperature change rate reaches the minimum water temperature change rate during the current heating process, which is less than 1, a signal is sent to the control circuit to turn off the heating power supply, and the program returns to the initial state and clears the change rates and the intermediate results.

Example 2 - For an electric kettle with quicker temperature rise and a relatively higher power of 3,000W, the electric kettle is provided with a negative temperature coefficient (NTC) thermal resistor, a microprocessor with multiple channel AD converters and a control circuit of transistors connected to the output port of the microprocessor. After power is on, the sensor detects the water temperature in the kettle in real time. If the temperature is higher than a threshold temperature 66°C for calculating the temperature change rate, the water temperature change rate begins to be calculated, and the temperature and the calculated water temperature change rate are stored. The microprocessor calculates the water temperature change rate, as the calculation period is set as 2 seconds. The digital quantity obtained by an A/D conversion representing the water temperature in previous 2 seconds is regarded as a subtrahend, and that of the current water temperature is regarded as a minuend. The difference is the water temperature change rate. The water temperature change tends to be slow as the water temperature change rate is equal to or lower than 1. When the water temperature change rate reaches the minimum water temperature change rate during the current heating process, which is less than 1, a signal is sent to the control circuit to turn off the heating power supply, and the program returns to the initial state and clears the change rates and the intermediate results.

Example 3 - For an electric kettle with medium temperature rise and a power of 2,000W, the electric kettle is provided with a negative temperature coefficient (NTC) thermal resistor, a microprocessor with multiple channel AD converters and a control circuit of transistors connected to the output port of the microprocessor. After power on, the sensor detects the water temperature in the kettle in real time. If the temperature is higher than a threshold temperature 60°C for calculating the temperature change rate, the water temperature change rate begins to be calculated, and the temperature and the calculated water temperature change rate are stored. The microprocessor calculates the water temperature change rate, as the calculation period is set as 6 seconds. The digital quantity obtained by an A/D conversion representing the water temperature in previous 6 seconds is regarded as a minuend, and that representing the current water temperature is regarded as a subtrahend. The difference is the water temperature change rate. The water temperature change tends to be slow as the water temperature change rate is equal to or lower than 1. When the water temperature change rate reaches the minimum water temperature change rate during the current heating process, which is less than 1, a signal is sent to the control circuit to turn off the heating power supply, and the program returns to the initial state and clears the change rates and the intermediate results.

## Claims

1. A method for determining whether water inside an electric kettle is boiling, comprising the following steps:
setting a temperature sensor, a microprocessor and a control circuit in the electric kettle;
detecting a temperature of the water inside the electric kettle, a temperature of a bottom heating unit which is in contact with the water, or a temperature of the sidewall of the electric kettle in real time by the sensor;
calculating a temperature change rate and comparing the temperature change rate with that of a period prior to the current period by the microprocessor; and
sending a signal to the control circuit when the temperature change rate decreases and reaches a minimum value,
wherein the period for calculating the water temperature change rate is preset in the microprocessor and the microprocessor sets the period in different levels after resistors connected at an input port of the microprocessor receive a signal of the electric kettle's heating power.

2. A method according to claim 1, **characterized in that** the control circuit turns off the power supply upon receipt of the signal sent by the microprocessor.

3. A method according to claim 2, **characterized in that** the microprocessor compares the current water temperature, the temperature of the bottom heating unit which is in contact with the water, or the temperature of the sidewall of the kettle with that of a period prior to the current period.

4. A method according to claim 3, **characterized in that** the microprocessor stores the water temperature and the water temperature change rate.

5. A method according to claim 4, **characterized in that** the water temperature change rate refers to a minimal water temperature change rate during the current heating process.

6. A method according to claim 5, **characterized in that** the microprocessor has a preset minimal water temperature change rate, and when the water temperature change rate is lower than the minimal water temperature change rate, the microprocessor sends a signal to the control circuit.

7. A method according to claim 6, **characterized in that** the microprocessor clears the stored rates of change and comparison results after the heating power supply is turned off by the control circuit.

8. A method according to claim 7, **characterized in that** the sensor detects the real time temperature of the water inside the electric kettle, the temperature of the bottom heating unit which is in contact with the water, or the temperature of the sidewall of the electric kettle when the control circuit turns on a heating power supply, and the water temperature change rate begins to be calculated when the temperature is higher than a threshold temperature for calculating the temperature change rate.

## Patentansprüche

1. Verfahren zum Bestimmen, ob Wasser innerhalb eines elektrischen Kessels kocht, aufweisend die folgenden Schritte:
Einstellen eines Temperatursensors, eines Mikroprozessors und einer Steuerschaltung in dem elektrischen Kessel;
Erfassen einer Temperatur des Wassers innerhalb des elektrischen Kessels, einer Temperatur einer Bodenheizeinheit, die in Kontakt mit dem Wasser ist, oder einer Temperatur der Seitenwand des elektrischen Kessels in Echtzeit durch den Sensor;
Berechnen einer Temperaturänderungsrate und Vergleichen der Temperaturänderungsrate mit der einer Periode vor der gegenwärtigen Periode durch den Mikroprozessor; und
Senden eines Signals zu der Steuerschaltung, wenn die Temperaturänderungsrate abnimmt und einen minimalen Wert erreicht,
wobei die Periode zum Berechnen der Wassertemperaturänderungsrate in dem Mikroprozessor voreingestellt ist und der Mikroprozessor die Periode in verschiedenen Pegeln einstellt, nachdem mit einem Eingangsport des Mikroprozessors verbundene Widerstände ein Signal über die Heizleistung des elektrischen Kessels empfangen haben.

2. Verfahren nach Anspruch 1, **dadurch gekennzeichnet, dass** die Steuerschaltung die Energiezuführung bei Empfang des von dem Mikroprozessor gesendeten Signals abschaltet.

3. Verfahren nach Anspruch 2, **dadurch gekennzeichnet, dass** der Mikroprozessor die gegenwärtige Wassertemperatur, die Temperatur der Bodenheizeinheit, die in Kontakt mit dem Wasser ist, oder die Temperatur der Seitenwand des Kessels mit der einer Periode vor der gegenwärtigen Periode vergleicht.

4. Verfahren nach Anspruch 3, **dadurch gekennzeichnet, dass** der Mikroprozessor die Wassertemperatur und die Wassertemperaturänderungsrate speichert.

5. Verfahren nach Anspruch 4, **dadurch gekennzeichnet, dass** sich die Wassertemperaturänderungsrate auf eine minimale Wassertemperaturänderungsrate während des gegenwärtigen Heizvorgangs bezieht.

6. Verfahren nach Anspruch 5, **dadurch gekennzeichnet, dass** der Mikroprozessor eine voreingestellte minimale Wassertemperaturänderungsrate hat, und wenn die Wassertemperaturänderungsrate niedriger als die minimale Wassertemperaturänderungsrate ist, der Mikroprozessor ein Signal zu der Steuerschaltung sendet.

7. Verfahren nach Anspruch 6, **dadurch gekennzeichnet, dass** der Mikroprozessor die gespeicherten Änderungsraten und Vergleichsergebnisse löscht, nachdem die Zuführung der Heizenergie durch die Steuerschaltung abgeschaltet ist.

8. Verfahren nach Anspruch 7, **dadurch gekennzeichnet, dass** der Sensor die Echtzeittemperatur des Wassers innerhalb des elektrischen Kessels, die Temperatur der Bodenheizeinheit, die in Kontakt mit dem Wasser ist, oder die Temperatur der Seitenwand des elektrischen Kessels erfasst, wenn die Steuerschaltung die Zuführung von Heizenergie einschaltet, und die Wassertemperaturänderungsrate beginnt, berechnet zu werden, wenn die Temperatur höher als eine Schwellenwerttemperatur zum Berechnen der Temperaturänderungsrate ist.

## Revendications

1. Procédé pour déterminer si oui ou non de l'eau à l'intérieur d'une bouilloire électrique est en train de bouillir, comprenant les étapes qui suivent :
positionnement d'un capteur de température, d'un microprocesseur et d'un circuit de commande dans la bouilloire électrique ;
détection d'une température de l'eau à l'intérieur de la bouilloire électrique, d'une température d'une unité de chauffage de fond qui est en contact avec l'eau ou d'une température de la paroi latérale de la bouilloire électrique en temps réel au moyen du capteur ;
calcul d'un taux de variation de température et comparaison du taux de variation de température avec celui d'une période avant la période courante au moyen du microprocesseur ; et
envoi d'un signal sur le circuit de commande lorsque le taux de variation de température décroît et atteint une valeur minimum,
dans lequel la période pour calculer le taux de variation de température de l'eau est préétablie dans le microprocesseur et le microprocesseur établit la période selon différents niveaux après que des résistances connectées à un port d'entrée du microprocesseur ont reçu un signal de la puissance de chauffage de bouilloire électrique.

2. Procédé selon la revendication 1, **caractérisé en ce que** le circuit de commande coupe l'alimentation en puissance suite à la réception du signal envoyé par le microprocesseur.

3. Procédé selon la revendication 2, **caractérisé en ce que** le microprocesseur compare la température d'eau courante, la température de l'unité de chauffage de fond qui est en contact avec l'eau ou la température de la paroi latérale de la bouilloire avec celle d'une période antérieure à la période courante.

4. Procédé selon la revendication 3, **caractérisé en ce que** le microprocesseur stocke la température de l'eau et le taux de variation de la température de l'eau.

5. Procédé selon la revendication 4, **caractérisé en ce que** le taux de variation de la température de l'eau est rapporté à un taux de variation de température d'eau minimum pendant le processus de chauffage courant.

6. Procédé selon la revendication 5, **caractérisé en ce que** le microprocesseur dispose d'un taux de variation de température d'eau minimum préétabli, et lorsque le taux de variation de la température de l'eau est inférieur au taux de variation de température d'eau minimum, le microprocesseur envoie un signal sur le circuit de commande.

7. Procédé selon la revendication 6, **caractérisé en ce que** le microprocesseur met à zéro les taux de variation stockés et les résultats de comparaison après que l'alimentation en puissance de chauffage est coupée par le circuit de commande.

8. Procédé selon la revendication 7, **caractérisé en ce que** le capteur détecte en temps réel la température de l'eau à l'intérieur de la bouilloire électrique, la température de l'unité de chauffage de fond qui est en contact avec l'eau ou la température de la paroi latérale de la bouilloire électrique lorsque le circuit de commande met en route l'alimentation en puissance de chauffage, et le taux de variation de la température de l'eau commence à être calculé lorsque la température est supérieure à une température de seuil pour calculer le taux de variation de température.
